# EUROPEAN PATENT SPECIFICATION

(11) **EP 0 278 979 B1**
(45) Date of publication and mention of the grant of the patent: **08.12.1993**
(21) Application number: 87905992.1
(22) Date of filing: 25.08.1987
(51) Int. Cl.: G01N 27/30

(54) **ELECTRODE ASSEMBLY**
ELEKTRODENEINHEIT
ASSEMBLAGE A ELECTRODE

(30) Priority: 25.08.1986 US 900056
(43) Date of publication of application: 24.08.1988
(73) Proprietor: ORION RESEARCH, INCORPORATED, Boston, MA 02129 (US)
(72) Inventor: HIRSHBERG, Moshe, Brookline, MA 02146 (US)
(74) Representative: Endlich, Fritz, Dipl.-Phys. Patentanwalt
(86) International application number: US8702138
(87) International publication number: WO8801739

(56) References cited:
- DE-B- 2 133 419
- US-A- 2 755 243
- US-A- 3 415 731
- US-A- 3 486 997
- US-A- 3 492 216
- US-A- 4 012 308
- US-A- 4 162 211
- US-A- 4 543 175
- US-A- 4 576 704
- US-A- 4 592 823
- Orion Model 90-02 Double Junction Reference Electrode blueprint

## Description

### Field of the Invention

This invention relates to an electrode assembly for analysis of a sample solution, and more particularly to an electrode assembly that can be purged of electrolyte through a selectively openable liquid junction.

### Background of the Invention

Sampling electrodes are often used in chemical laboratories and other locations where it is necessary to perform either qualitative or quantitative analyses on various sample solutions. Specifically, an electrode is immersed in a sample of a substance in order to measure the concentration of a particular ion or group of ions. An example of such a test is a pH test, often performed on sample solutions to find the H⁺ion concentrations.

When measuring H⁺, or other ionic concentrations, it is usually necessary to have two electrodes, a reference electrode and a measuring electrode. Each of these electrodes contains a conductor or lead immersed in a solution of electrolyte so as to form a voltaic half cell. The electrodes, usually tubular shaped, each have an opening so that when the electrode is immersed in the sample solution, a potential is created between the solution and the electrolyte contained in the electrode. The reference electrode generates a constant potential regardless of the ionic concentration of the sample solution. The measuring electrode, on the other hand, generates a potential that is a function of the ionic concentration of the sample solution. The leads of both electrodes are connected to the opposite ends of a voltmeter and the potential difference between the two is a measure of the ionic concentration of the sample.

Often the reference electrode and the measuring electrode are manufactured together as a single electrode, called a combination electrode. A typical combination electrode comprises a wide diameter reference electrode with a measuring electrode that extends axially through it.

Typically there is a liquid junction structure at the base of the reference electrode. The liquid junction structure provides a region of contact between the sample solution and the electrolyte in the electrode. The electrolyte slowly diffuses across the liquid junction so a voltaic cell is formed between the electrode and the sample solution. An ideal liquid junction should resist clogging, should wet easily despite its low flow rate, and should be cleanable. Also, a liquid junction should not be so large that sample ions are able to migrate into the junction and form a separate liquid junction potential.

Reference electrodes are manufactured with one of two types of liquid junction. The first, a salt bridge junction, comprises an electrode having a closed-end tube extending out of an opening in the bottom of an electrode. The tube is attached to the electrode with porous ceramic material that forms a liquid junction. The electrolyte diffuses through the ceramic material into the sample solution. Salt bridge junctions are relatively long so they are slow to wet and prone to clogging. There is a tendency for ions of the sample solution ions to migrate into the salt bridge junctions and from their own liquid junction potential.

The second type of reference electrode has a selectively openable liquid junction see e.g. US-A-4162211. In this type of electrode there is a glass-to-glass coupling that can be selectively opened or closed. When the coupling is closed a liquid junction is formed that enables the electrolyte to slowly diffuse out of the electrode. Opening the coupling allows the elecrolyte to rapidly flow out of the electrode. This enables the operator to replace electrolyte that may have become contaminated through use with a fresh refill.

Two types of openable liquid junction electrodes have been manufactured. In the first type of electrode there is an electrode with an upper body of a first diameter and a lower body of a smaller diameter than the upper body. Integral with the outer wall of the lower body is an upward oriented conic section that extends around the lower body and is spaced below the upper body. A bore in the conic section allows the electrolyte to flow from the electrode. A stopper ring is provided that can be selectively located over the conic section. The stopper ring has an inside wall with the same conic dimensions as that of the conic section. When the stopper ring is secured over the conic section a liquid junction forms between the two surfaces and the electrolyte flows out of the bore and diffuses across the liquid junction. When the stopper is moved away from the conic section the junction is opened and the electrolyte can be purged from the electrode through the bore.

There are disadvantages to this type of open junction electrode. The stopper conic section area of contact that forms the liquid junction is large. Sample solution can migrate into the junction and can generate liquid junction potential. When the electrode is to be purged, it is necessary for the operator to handle both the stopper ring and the electrode tube. If the electrode had been immersed in a particularly hazardous solution, the operator would be required to take appropriate precautions.

Also, both the electrolyte and sample solutions are composed of ions. When the electrode is removed from the sample solution, the liquid evaporates, leaving a coating of salt in the liquid junction. The salt adhesive tension causes the stopper ring to stick to the conic section. Often the operator must use significant force to loosen the stopper ring from the conic section. Occasionally an operator using such force will break the electrode tube, rendering the electrode useless. Also, a degree of force is needed to securely fasten the stopper ring over the conic section. Use of excessive force to secure the stopper ring to the conic section is another cause of broken electrodes.

The second type of openable liquid junction electrode is a flushable electrode. The flushable electrode has an electrode tube with an open bottom, with a stopper located in it. The stopper is attached to the end of a connecting rod that extends axially through the electrode tube. The rod is coupled to a cap located over the top of the electrode tube. The stopper has a conic outside wall and the electrode tube bottom opening has a complementary conic inside wall. A biasing spring located under the cap around the connecting rod urges the cap and connecting rod upward so the stopper abuts the electrode tube inside wall. A liquid junction forms along the elongated area of contact between the stopper and electrode tube bottom opening.

After the electrode is used to make one or more measurements, the electrolyte can be flushed from the electrode. This is done by depressing the cap so the connecting rod and stopper are urged downward. This creates an opening in the bottom of the electrode through which the electrolyte flows out. Ideally, this allows for simple one-handed purging of electrolyte. Also, the flow of electrolyte flushes or cleans the surfaces of the stopper and electrode tube bottoms opening that form the liquid junction.

However, there are disadvantages associated with flushable electrodes. To maintain the liquid junction, the stopper must be securely head in the electrode tube bottom opening. This necessitates the use of a relatively inelastic biasing spring that is difficult to compress. Sometimes it is necessary to use a considerable amount of effort to depress the electrode cap in order to flush the electrode. Also, the area of contact between the stopper and electrode tube bottom opening that forms the liquid junction is large. Sample ions can migrate into the junction area and form a liquid junction potential.

Furthermore, as with stopper-ring electrodes, when the flushable electrode is removed from the solution the electrolyte in the liquid junction will evaporate. The evaporating liquid leaves a salt residue in the liquid junction. The adhesive tension of the salt residue causes the stopper to stick to the electrode tube bottom opening. This adhesion, in addition to the force normally exerted by the biasing spring, sometimes makes it very difficult to free the stopper so the electrolyte can be flushed out. Occasionally an operator will use excessive force in an effort to free the stopper, and break the electrode.

Also, it has proved difficult to provide a combination electrode having this type of flushable junction. The reason for this is that the measuring electrode has a fragile, ion sensitive tip and would be located in relatively close proximity to the portion of the electrode that forms the liquid junction. The would be subject to relatively significant coupling stress and would be prone to break. Thus, it has not been possible to provide a measuring electrode that can function as a selectively moveable stopper and connecting rod.

A need, therefore, exists for a new flushable electrode assembly that provides a liquid junction that wets rapidly, is of relatively short length, and is not prone to clogging or to generating a separate potential. The stopper should be relatively easy to open from the normally closed, liquid-junction position. The electrode assembly should also allow for a measuring electrode to be housed inside a flushable reference electrode, so as to provide a flushable combination electrode.

### Summary of the Invention

This invention comprises providing a flushable electrode assembly with a bulb shaped stopper. The stopper extends into an annular bottom opening in the electrode tube. The bottom opening is defined by an electrode tube inside surface that has a curved wall that is approximatly complementary to the curved outer surface of the stopper. The stopper is located at the end of a glass connecting rod that extends axially through the electrode tube. The connecting rod is coupled to a cap that extends over the electrode tube. A biasing spring is located under the cap, over the top of the electrode tube, and around the connecting rod. The biasing spring exerts sufficent force to urge the cap and connecting rod upward, so that the stopper normally abuts the electrode tube inside surface.

The surfaces of the stopper and electrode tube inside surface that it comes in contact with are ground together before use. As a result, when the stopper abuts the inside surface a thin, annular liquid junction forms between the two surfaces. Since only minimal contact is needed between the stopper and electrode to form the liquid junction, only a minimal amount of force is needed to hold the stopper against the electrode. An easily compressible, elastic, biasing spring offers sufficient force to maintain the liquid junction. Thus, only a minimal amount of effort is needed to depress the cap to open the liquid junction so the electrode can be flushed.

This electrode has other advantages. The liquid junction is formed between the thin annular area of contact between the stopper and the bottom of the electrode. Few sample ions can migrate into the area so the chances of a liquid junction potential developing is reduced. Furthermore, when electrolyte is flushed it flows over the small surface areas that form the liquid junction. This flow thoroughly cleans the surfaces of the stopper and electrode tube of sample solution ions that may have diffused into the liquid junction region.

Also, the effect of salts left between the stopper and the electrode is reduced. The reason for this is that the adhesive force between the small area of contact between the stopper and electrode tube is not sufficient to cause the two to stick together.

Furthermore, the stopper is not subject to significant stress when coupled to form the liquid junction. The stopper may be formed of a relatively thin fragile glass and provided with an ion sensitive tip. Thus, a measuring electrode can be used as the connecting rod and stopper assembly to provide a flushable combination electrode.

### Brief Description of the Drawings

The foregoing and other features and advantages of the invention will be apparent from the following more particular description of the preferred embodiment of the invention, as illustrated by the accompanying drawings, in which characters refer to the same parts throughout the different views. The drawings are not necessarily to scale, emphasis instead being placed on illustrating the principles of the invention.

FIG. 1 is a side-view of a combination electrode of the preferred embodiment of this invention.

FIG. 2 is a cross-sectional side view of the preferred embodiment of the combinational electrode of this invention.

### Detailed Description of the Invention

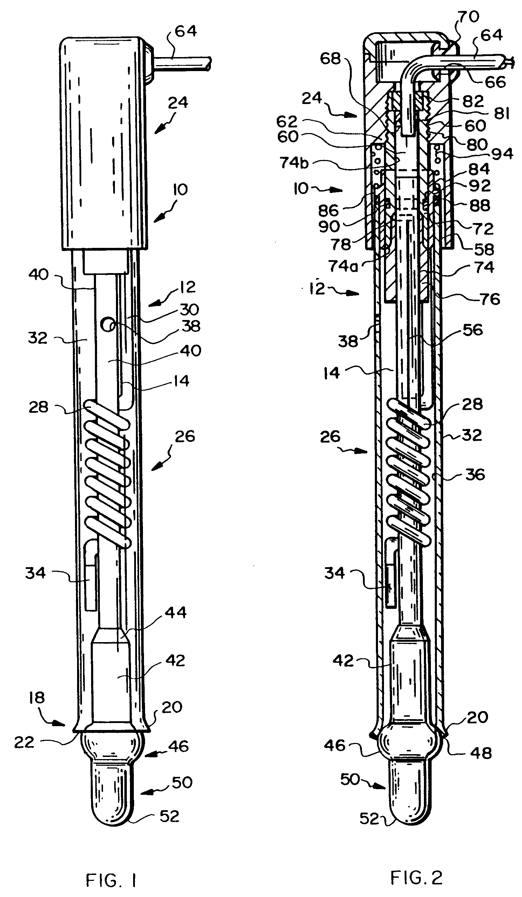

As is shown in Figure 1, a combination electrode 10 includes an outer electrode tube 12 that functions as the reference electrode. A glass measuring electrode 14 extends axially through the electrode tube and through an electrode bottom opening 16. As illustrated in Figure 2, the electrode bottom opening is defined by an outer electrode tube end portion 18 with a flaired, outside wall 20 and a curved inside wall 22. A cap 24 is located over the top of the outer electrode tube.

In this embodiment of the invention the reference electrode 12 is a dual junction electrode and has a helical tube 26 coiled around the upper portion of the measuring electrode 14 that serves as a reference electrolyte cell. The reference electrolyte cell is filled with electrolyte 28 and contains a reference electrode lead 30. An outer filling solution chamber 32 is defined by the annular space between the measuring electrode and the outer electrode tube. A porous plug 34 at the end of the reference electrolyte cell provides fluid communication between the reference electrolyte cell and the outer filling chamber. The outer filling solution chamber is filled with a sufficient amount of outer filling solution 36 so the porous plug is immersed in the solution. The outer filling solution is introduced into the chamber through a fill bore 38 located near the top of the outer electrode tube.

The measuring electrode 14 includes an inner electrode tube 40. A base section 42 of increased diameter is connected to the end of the inner electrode tube by an intermediate tapered section 44. A curved, bulbous, hollow stopper 46 is attached to the base outside of the outer electrode tube adjacent the electrode bottom opening. The stopper is in fluid communication with the inner electrode tube through the base and intermediate sections. The stopper has a diameter greater than that of the electrode bottom opening and a curvature approximately the same as that of the inside wall 22 of the electrode end portion 18. Normally, the stopper abuts the inside wall of the electrode tube end so that an annular liquid junction 48 forms between the adjacent surfaces, as described hereinafter. An electrode tip 50 with an ion-sensitive membrane 52 extends downward from the stopper. The measuring electrode is filled with electrolyte 54 and contains a measuring lead 56.

The cap 24 has a first bore section 58 that houses the top of the electrode outer tube 12, and a cap second bore section 50 concentric with and of reduced diameter then the cap first bore section. A lead cable 64 extends into the second bore section through an outer lead opening 66 on the outside wall of the cap and an inner lead opening 68 at the base 69 of the second bore section. A grommet 70 in the outer lead opening secures the lead cable to the cap.

A coupling sleeve 72 secures the measuring electrode 14 to the cap 24. The top of the measuring electrode is secured into an axial bore 74 in the sleeve by a lower epoxy ring 76 between the electode and the bore wall. The epoxy ring extends below the coupling sleeve and has an indented portion (not shown) that serves as a base for mounting the reference electrode cell 26. An O-ring 78 above the epoxy ring provides a liquid seal around the bottom of the coupling sleeve. The bottom 74a of the sleeve bore has an increased diameter over the center of the bore to accomodate the epoxy ring and the O-ring. The outside wall 80 of the coupling sleeve is threaded to be secured into the cap second bore 50 that is provided with an inter fitting grooved wall.

The lead cable 64 terminates inside the top 74b of the coupling sleeve bore. An upper epoxy ring 81 around the lead cable fastens it in the bore. An O-ring 82 under the epoxy ring provides a liquid seal around the lead cable. The top of the coupling sleeve bore has an increased diameter over the center of the bore to accommodate the epoxy ring and the O-ring. The measuring lead 56 extends from the lead cable into the measuring electrode 14. The reference lead 30extends from the the lead cable and runs between the measuring electrode and the wall of the coupling sleeve bore, through a lead bore (not shown) in the lower fastening ring into the reference electrolyte cell 26.

A reinforcing collar 84 is located between the coupling sleeve 72 and the electrode tube 12. The reinforcing collar has an intermediately positioned stop ring 86 that extends around the top rim 87 of the electrode tube. A padded washer 88 is located under the bottom of the stop ring and is in contact with the outer electrode tube. An external O-ring 90 located around the outside of the coupling sleeve is in sealing contact with the inside wall of the reinforcing collar. The external O-ring is housed in an annular groove 92 that extends around the outside of the coupling sleeve. A helical biasing spring 94 is located around the coupling sleeve and extends between the base 62 of the cap first bore and the reinforcing collar stop ring 86. The biasing spring exerts an upward force on the cap-measuring electrode assembly so the stopper normally abuts the electrode inside wall 22 around the electrode bottom opening 16.

After the electrode 10 is initially assembled, the stopper 46 is then ground against the electrode tube bottom inside wall 22 around the entire circumferences of both the stopper and the inside wall. As a result, the adjacent surfaces are in contact with each other around the circumference of the electrode bottom opening 16. This area of contact forms the thin, annular, liquid junction 48 between the outer filling chamber and the exterior environment.

The liquid junction 48 forms when the stopper 46 is in contact with the inside wall of the outer electrode tube, regardless of the force of contact. Thus the biasing spring 94 can be elastic, and compressible and still exert sufficient force to urge the stopper against the electrode tube to maintain the liquid junction.

Furthermore, the coupling stress on the stopper is minimal so the stopper can be formed of relatively thin fragile material. This makes it possible to provide the stopper with the electrode tip 50 having an ion sensitive membrane 52. These elements are necessary for the measuring electrode 14 of the combination electrode 10 of this invention.

When the electrode is immersed in a sample solution the outer filling solution 36 readily diffuses across the narrow liquid junction 48 to the adjacent solution. In other words, the liquid junction will wet relatively quickly. This diffusion across the liquid junction causes an ion exchange that generates a constant potential for use as a reference against which the potential generated by the measuring electrode 14 can be measured.

Since the liquid junction area is small there is minimal opportunity for sample ions to diffuse into the junction. This substantially eliminates the possibility of a separate liquid junction potential developing. When the electrode is removed from the solution the evaporating solution and electrolyte leave salts in the liquid junction. The binding action of the salts in this small area is not sufficient to hamper the flushing of the electrode.

After taking one or more measurements the outer filling solution 36 can be flushed from the electrode 10. This is done by the operator holding the electrode tube and depressing the cap 24. This movement urges the measuring electrode 14 downward and the stopper 46 away from the bottom opening 16. This opens the liquid junction 48 so the outer filling solution can rapidly flow out of the outer filling solution chamber 32. Since the biasing spring that supports the cap is compressible, only a minimal amount of force is needed to depress the cap. In most situations it is anticipated that flushing the electrode will be a on-handed operation; the operator will be able to grip the outer electrode tube 12 with her fingers and depress the cap 24 with her thumb. When the electrode is flushed the outer filling solution flows over the stopper 46 and the inside wall 22 of the electrode end 18. This flow thoroughly flushes or cleans the narrow surfaces that normally form the liquid junction. After the outer filling solution is flushed the cap is released. The biasing spring returns the measuring electrode and stopper to their normal positions. Upon the stoppers re-contact with the electrode tube, the liquid junction 48 is reformed. The electrode can be made ready for future use by refilling the outer filling solution chamber with solution 36 through the fill opening 38.

While the embodiment of the invention described relates to using a measuring electrode as the stopper-connecting rod assembly to make a combination electrode, it is understood that this is for the purposes of description and illustration only. The flushable electrode of this invention can be manufactured as a single electrode by substituting a passive connecting rod and stopper for the measuring electrode. The connecting rod would be a solid glass rod or a hollow glass tube without an electrode lead and electrolyte. The stopper would be located at the same location as the measuring electrode stopper section and serve the same function; it would abut the inside wall of the electrode end to form a liquid junction therebetween. Thus, it is understood that the scope of the invention is limited only by the following claims.

## Claims

1. An electrode assembly comprising in combination:
A) an outer electrode tube (12) having an annular bottom opening (20) defined by an outwardly curved inside wall (22) and a bulb shaped stopper (46);
B) a cap means (24) located over the outer electrode tube (12) top section;
C) a connecting rod (40) attached to said cap means (24) and extending axially through said outer electrode tube (12), said stopper (46) being attached to the end of said connecting rod (40) and located outside of the electrode tube (12) adjacent to said bottom opening (20) and having a diameter greater than that of said bottom opening (20); and
D) biasing means (94) for selectively applying force on said cap means (24) and connection rod (40) so that said stopper (46) normally abuts the curved inside wall (22) of said bottom opening so as to form a thin annular liquid junction (48) therebetween.

2. The electrode assembly of claim 1 wherein:
A) the connecting rod (40) is an inner electrode tube extending axially through said outer electrode tube (12) and terminating in said stopper (46); and
B) said stopper (46) itself terminates in an ion-sensitive membrane (52) that extends away from said outer electrode tube (12).

3. The electrode assembly of claim 1 or 2 wherein said connecting rod (40) and said inner electrode tube, resp., said outer electrode tube (12) and said stopper (46) are formed of glass.

4. The electrode assembly of one of the preceding claims wherein the bulb shaped stopper (46) is ground against the inside wall (22) of said bottom opening (20) along said liquid junction (48) therebetween.

5. The electrode assembly of one of the preceding claims wherein said biasing means (94) is a spring disposed inside said cap means (24) for selectively applying a force on said cap and said connecting rod (40) or said inner electrode tube,resp., so that said stopper (46) is urged along said liquid junction (48) against the outwardly curved inside wall (22).

6. The electrode assembly of claim 1,2 or 3 wherein a reference cell (28) is located within the outer electrode tube (12) and is in fluid communication with the space within the outer electrode tube (12).

7. The electrode assembly of claim 6 wherein said reference cell (28) comprises a helical tube disposed around said inner connecting rod (40) or electrode,resp.

8. The electrode assembly of claim 1 or 2 wherein:
A) said cap (24) is provided with a first bore (58) of a selected diameter, in which bore said outer electrode tube (12) top section is being disposed; and
B) a second bore (60), coaxial with and having a smaller diameter than said first bore (58), is formed at the base of said first bore (58), a coupling sleeve (72) being secured in said second bore (60), with said connecting rod attached to said coupling sleeve (72).

9. The electrode assembly of claim 1 or 2 wherein a lead cable (64) with at least one electrode lead extends through a lead opening (66) formed in said cap (24).

10. The electrode assembly of claim 6 or 7 further including:
A) a first electrode lead (30) located in the reference cell (28),
B) a second electrode lead (56) located in said inner electrode tube (40), and
C) a lead cable (64) from which said first and second electrode leads (30,56) extend, said lead cable (64) extending through a lead opening (66) formed in said cap (24).

11. The electrode assembly of claim 8 or 10 wherein a reinforcing collar (84) is provided between the coupling sleeve (72) and the top portion of the electrode tube (12), the reinforcing collar (84) having an intermediately located stop ring (86) that extends around the top of the electrode tube (12).

12. The electrode assembly of claim 11 wherein the biasing spring (94) is located inside the first bore (58) around the collar (84) between the collar stop ring (86) and the base (62) of the first bore (58) to provide the selective force on said cap (24) and connecting rod (40).

13. The electrode assembly of claim 11 wherein a padded washer (88) is located under the reinforcing collar stop ring (86) and is in contact with the top rim of the electrode tube (12).

14. The electrode assembly of claim 11 wherein an external O-ring (90) is located around the coupling sleeve (72), the O-ring (90) is in sealing contact with the reinforcing collar (84), and the O-ring (90) is housed inside an annular groove (92) located around the outside of the coupling sleeve (72).

15. The electrode assembly of one of the preceding claims wherein said biasing spring (94) is an elastic and compressible spring exerting a minimal coupling stress on the stopper (46).

16. The electrode assembly of claim 15 wherein the stopper (46) is formed out of fragile material.

17. The electrode assembly of one of the preceding claims wherein the outer filling solution (36) can be flushed from the electrode (10) by a one-handed operation and by exerting a minimal amount of force to depress the cap (24).

## Patentansprüche

1. Elektrodeneinheit mit:
A) einem äußeren Elektrodenrohr (12), das eine ringförmige untere Öffnung (20) aufweist, die durch eine nach außen gekrümmte Innenwand (22) und ein birnenförmiges Absperrelement (46) definiert ist,
B) einer über dem oberen Endbereich des äußeren Elektrodenrohrs (12) angeordneten Kappe 24(,
C) einer Verbindungsstange (40), die an der Kappe (24) befestigt ist und sich axial durch das äußere Elektrodenrohr (12) erstreckt, wobei das Absperrelement (46) an dem Ende der Verbindungsstange (40) befestigt und außerhalb des Elektrodenrohrs (12) angrenzend an die untere Öffnung (20) angeordnet ist und einen Durchmesser aufweist, der größer als derjenige der unteren Öffnung (20) ist, sowie mit
D) einer eine Vorspannung erzeugenden Einrichtung (94), um selektiv Kraft auf die Kappe (24) und die Verbindungsstange (40) zu übertragen, so daß das Absperrelement (46) normalerweise an der gewölbten Innenwand (22) der unteren Öffnung anliegt, um eine dünne ringförmige Flüssigkeits-Übergangszone (48) dazwischen zu bilden.

2. Elektrodeneinheit nach Anspruch 1, wobei:
A) die Verbindungsstange (40) ein inneres Elektrodenrohr ist, das sich axial durch das äußere Elektrodenrohr (12) erstreckt und in dem Absperrelement (46) endet, und
B) das Absperrelement (46) in einer ionenempfindlichen Membran (52) endet, die sich weg von dem äußeren Elektrodenrohr (12) erstreckt.

3. Elektrodeneinheit nach Anspruch 1 oder 2, wobei die Verbindungsstange (40) beziehungsweise das innere Elektrodenrohr, das äußere Elektrodenrohr (12) und das Absperrelement (46) aus Glas hergestellt sind.

4. Elektrodeneinheit nach einem der vorhergehenden Ansprüche, wobei das birnenförmige Absperrelement (46) gegen die Innenwand (22) der unteren Öffnung (20) entlang der dazwischen vorgesehenen Flüssigkeits-Übergangszone (48) eingeschliffen ist.

5. Elektrodeneinheit nach einem der vorhergehenden Ansprüche, wobei die eine Vorspannung erzeugende Einrichtung (94) eine innerhalb der Kappe (24) angeordnete Feder ist, die selektiv eine Kraft auf die Kappe und die Verbindungsstange (40) beziehungsweise das innere Elektrodenrohr ausübt, so daß das Absperrelement (46) entlang der Flüssigkeits-Übergangszone (48) gegen die nach außen gekrümmte Innenwand (22) angedrückt wird.

6. Elektrodeneinheit nach Anspruch 1,2 oder 3, wobei eine Bezugszelle (28) in dem äußeren Elektrodenrohr (12) angeordnet ist und in Flüssigkeitsverbindung mit dem Innenraum des äußeren Elektrodenrohrs (12) steht.

7. Elektrodeneinheit nach Anspruch 6, wobei die Bezugszelle (28) durch eine wendelförmige Rohrleitung gebildet ist, welche die innere Verbindungsstange (40) beziehungsweise die innere Elektrode umgibt.

8. Elektrodeneinheit nach Anspruch 1 oder 2, wobei:
A) die Kappe (24) eine erste Bohrung (58) mit einem ausgewählten Durchmesser aufweist, in welcher Bohrung der obere Abschnitt des äußeren Elektrodenrohrs (12) angeordnet ist, und
B) eine zweite Bohrung (60) in der Basis der ersten Bohrung (58) ausgebildet ist die koaxial zu der ersten Bohrung (58) vorgesehen ist und einen kleineren Durchmesser als diese aufweist, sowie eine Kupplungshülse (72) vorgesehen ist, die in der zweiten Bohrung (60) befestigt ist, an welcher Kupplungshülse (72)die Verbindungsstange angeordnet ist.

9. Elektrodeneinheit nach Anspruch 1 oder 2, wobei ein Leitungskabel (64) mit mindestens einer Elektrodenleitung sich durch eine Leitungsöffnung (66) in der Kappe (24) erstreckt.

10. Elektrodeneinheit nach Anspruch 6 oder 7, wobei ferner:
A) eine erste Elektrodenleitung (30) in der Bezugszelle (28) vorgesehen ist,
B) eine zweite Elektrodenleitung (56) in dem inneren Elektrodenrohr (40) vorgesehen ist, und wobei
C) ein Leitungskabel (64) vorgesehen ist, von dem sich die erste und die zweite Elektrodenleitung (30,56) erstreckt, welches Leitungskabel (64) sich durch eine Leitungsöffnung (66) in der Kappe (24) erstreckt.

11. Elektrodeneinheit nach Anspruch 8 oder 10, wobei ein verstärkender Bund (84) zwischen der Kupplungshülse (72) und dem oberen Abschnitt des Elektrodenrohrs (12) vorgesehen ist, welcher Bund (84) einen in einer mittleren Lage angeordneten Anschlagring (86) aufweist, der sich um das obere Ende des Elektrodenrohrs (12) erstreckt.

12. Elektrodeneinheit nach Anspruch 11, wobei die eine Vorspannung erzeugende Feder (94) innerhalb der ersten Bohrung (58) um den Bund (84) zwischen dem Anschlagring (86) und der Basis (62) der ersten Bohrung (58) angeordnet ist, um die selektive Kraft auf die Kappe (24) und die Verbindungsstange (40) auszuüben.

13. Elektrodeneinheit nach Anspruch 11, wobei eine federnde Unterlegscheibe (88) unter dem Anschlagring (86) angeordnet ist und in Berührung mit dem oberen Rand des Elektrodenrohrs (12) steht.

14. Elektrodeneinheit nach Anspruch 11, wobei ein äußerer O-Ring (90) um die Kupplungshülse (72) angeordnet ist, welcher O-Ring (90) in abdichtender Berührung mit dem verstärkenden Bund (84) steht, und wobei der O-Ring (90) in einer ringförmigen Nut (92) vorgesehen ist, die um die Außenseite der Kupplungshülse (72) angeordnet ist.

15. Elektrodeneinheit nach einem der vorhergehenden Ansprüche, wobei die eine Vorspannung erzeugende Feder (94) eine elastische und zusammendrückbare Feder ist, die eine minimale Kupplungsspannung an das Absperrelement (46) ausübt.

16. Elektrodeneinheit nach Anspruch 15, wobei das Absperrelement (46) aus zerbrechlichem Material gebildet ist.

17. Elektrodeneinheit nach einem der vorhergehenden Ansprüche, wobei die äußere eingefüllte Lösung (36) aus der Elektrode (10) durch Betätigung mit einer Hand und durch Ausübung einer minimalen Kraft zum Herabdrücken der Kappe (24) ausgespült werden kann.

## Revendications

1. Assemblage à électrode comprenant en combinaison :
A) un tube d'électrode extérieur (12) ayant une ouverture de fond annulaire (20) définie par une paroi intérieure recourbée vers l'extérieur (22) et un bouchon en forme d'ampoule (46) ;
B) un chapeau (24) situé sur la partie supérieure du tube d'électrode extérieur (12) ;
C) une tige de raccordement (40) attachée audit chapeau (24) et traversant dans le sens axial ledit tube d'électrode extérieur (12), ledit bouchon (46) étant attaché à l'extrémité de ladite tige de raccordement (40) et situé à l'extérieur du tube d'électrode (12) adjacent à ladite ouverture de fond (20) et ayant un diamètre supérieur à celui de ladite ouverture de fond (20) ; et
D) un moyen en biais (94) pour exercer sélectivement une force sur ledit chapeau (24) et sur la tige de raccordement (40), de sorte que ledit bouchon (46) bute normalement contre la paroi intérieure recourbée (22) de ladite ouverture de fond de façon à former une jonction liquide annulaire mince (48) entre eux.

2. Assemblage à électrode selon la revendication 1, dans lequel :
A) la tige de raccordement (40) est un tube d'électrode intérieur traversant dans le sens axial ledit tube d'électrode extérieur (12) et terminant dans ledit bouchon (46) ; et
B) ledit bouchon (46) lui-même se termine dans une membrane sensible aux ions (52) qui est à l'extérieur dudit tube d'électrode extérieur (12).

3. Assemblage à électrode selon les revendications 1 ou 2, dans lequel ladite tige de raccordement (40), respectivement ledit tube d'électrode intérieur, ledit tube d'électrode extérieur (12) et ledit bouchon (46) sont formés de verre.

4. Assemblage à électrode selon l'une quelconque des revendications précédentes, dans lequel le bouchon en forme d'ampoule (46) est enfoncé contre la paroi intérieure (22) de ladite ouverture de fond (20) le long de ladite jonction liquide (48) formé entre eux.

5. Assemblage à électrode selon l'une quelconque des revendications précédentes, dans lequel ledit moyen en biais (94) est un ressort disposé à l'intérieur dudit chapeau (24) pour exercer sélectivement une force sur ledit chapeau et sur ladite tige de raccordement (40) ou respectivement sur ledit tube d'électrode intérieur, de sorte que ledit bouchon (46) est poussé le long de ladite jonction liquide (48) contre la paroi intérieure recourbée vers l'extérieur (22).

6. Assemblage à électrode selon les revendications 1, 2 ou 3, dans lequel une cellule de référence (28) est située à l'intérieur du tube d'électrode extérieur (12) et est en communication de fluide avec l'espace situé à l'intérieur du tube d'électrode extérieur (12).

7. Assemblage à électrode selon la revendication 6, dans lequel ladite cellule de référence (28) comprend un tube hélicoïdal disposé autour de ladite tige de raccordement intérieure (40) ou respectivement de l'électrode.

8. Assemblage à électrode selon la revendication 1 ou 2, dans lequel :
A) ledit bouchon (24) est muni d'un premier alésage (58) d'un diamètre choisi, alésage dans lequel la partie supérieure dudit tube d'électrode extérieur (12) est disposée ; et
B) un second alésage (60), coaxial audit premier alésage (58), et ayant un diamètre plus petit que celui-ci, est formé à la base dudit premier alésage (58), un manchon d'accouplement (72) étant fixé dans ledit second alésage (60), ladite tige de raccordement étant attachée audit manchon d'accouplement (72).

9. Assemblage à électrode selon les revendications 1 ou 2, dans lequel un câble conducteur (64), avec au moins un fil conducteur d'électrode, traverse une ouverture pour conducteur (66) formée dans ledit chapeau (24).

10. Assemblage à électrode selon les revendications 6 ou 7, incluant en outre :
A) un premier fil conducteur d'électrode (30) situé dans la cellule de référence (28),
B) un second fil conducteur d'électrode (56) situé dans ledit tube d'électrode intérieur (40), et
C) un câble conducteur (64) d'où partent lesdits premier et second fils conducteurs d'électrode (30, 56), ledit câble conducteur (64) traversant une ouverture pour conducteur (66) formée dans ledit chapeau (24).

11. Assemblage à électrode selon les revendications 8 ou 10, dans lequel un collier de renfort (84) est prévu entre le manchon d'accouplement (72) et la partie supérieure du tube d'électrode (12), le collier de renfort (84) ayant un anneau d'arrêt situé de façon intermédiaire (86) qui entoure le haut du tube d'électrode (12).

12. Assemblage à électrode selon la revendication 11, dans lequel le ressort en biais (94) est situé à l'intérieur du premier alésage (58) autour du collier (84) entre l'anneau d'arrêt du collier (86) et la base (62) du premier alésage (58) pour exercer la force sélective sur ledit chapeau (24) et sur la tige de raccordement (40).

13. Assemblage à électrode selon la revendication 11, dans lequel une rondelle striée (88) est située sous l'anneau d'arrêt (86) du collier de renfort et est en contact avec le bord supérieur du tube d'électrode (12).

14. Assemblage à électrode selon la revendication 11, dans lequel un joint torique externe (90) est situé autour du manchon d'accouplement (72), le joint torique (90) est en contact d'étanchéité avec le collier de renfort (84), et le joint torique (90) est logé à l'intérieur d'une rainure annulaire (92) située autour de l'extérieur du manchon d'accouplement (72).

15. Assemblage à électrode selon l'une quelconque des revendications précédentes, dans lequel ledit ressort en biais (94) est un ressort élastique et compressible exerçant une contrainte de couplage minimale sur le bouchon (46).

16. Assemblage à électrode selon la revendication 15, dans lequel le bouchon (46) est formé en matière fragile.

17. Assemblage à électrode selon l'une quelconque des revendications précédentes, dans lequel la solution de remplissage extérieure (36) peut être chassée de l'électrode (10) par une opération à une main et en exerçant une quantité minimale de force pour appuyer sur le chapeau (24).
